# EUROPEAN PATENT SPECIFICATION

(11) **EP 2 829 954 B1**
(45) Date of publication and mention of the grant of the patent: **26.08.2020**
(21) Application number: 13763781.5
(22) Date of filing: 15.03.2013
(51) Int. Cl.: G06F 3/041, G06F 3/038, G06F 3/0346, G06F 3/0488, G06F 3/01

(54) **INFORMATION TERMINAL, METHOD FOR CONTROLLING INPUT ACCEPTANCE, AND PROGRAM FOR CONTROLLING INPUT ACCEPTANCE**
INFORMATIONSENDGERÄT, VERFAHREN ZUR STEUERUNG EINER EINGABEAKZEPTANZ UND PROGRAMM ZUR STEUERUNG EINER EINGABEAKZEPTANZ
TERMINAL D'INFORMATIONS, PROCÉDÉ DE COMMANDE D'UNE ACCEPTATION D'ENTRÉE ET PROGRAMME DE COMMANDE D'UNE ACCEPTATION D'ENTRÉE

(30) Priority: 23.03.2012 JP 2012067288
(43) Date of publication of application: 28.01.2015
(73) Proprietor: NTT Docomo, Inc., Tokyo 100-6150 (JP)
(72) Inventor: YAMAZAKI Shunsaku, Tokyo 100-6150 (JP); YAMAZAKI Yuika, Tokyo 100-6150 (JP); OTA Tomohiro, Tokyo 100-6150 (JP); SHIMOSAKA Tomoki, Tokyo 100-6150 (JP)
(74) Representative: Beder, Jens
(86) International application number: PCT/JP2013/057454
(87) International publication number: WO 2013/141161

(56) References cited:
- EP-A2- 2 503 443
- JP-A- H10 333 737
- JP-A- 2004 159 028
- JP-A- 2004 159 028
- JP-A- 2009 267 809
- JP-A- 2011 192 231
- JP-A- 2011 192 231
- US-A1- 2009 327 977
- US-A1- 2010 079 508

## Description

### Technical Field

The present invention relates to an information terminal, a method for controlling input acceptance, and a program for controlling input acceptance.

### Background Art

Recently, information terminals having a display with a function as a touch panel are in widespread use. The information terminals of this kind are provided with a function to control the touch panel and display into an OFF state with a lapse of a predetermined period of time and a lock function to disable acceptance of operation through a user's operation, in order to prevent acceptance of an operation which the user does not intend to do. Furthermore, there is the known technology of controlling the touch panel so as not to accept input thereon when adjacency of a user's ear or cheek is detected by a proximity sensor provided on a surface where the touch panel in the information terminal is mounted. On the other hand, there is the known technology of detecting user's gaze and moving a pointing device depending upon a moving direction of the gaze, as input means for the information terminal (e.g., cf. Japanese Patent Application Laid-open No. 2004-21870).

US 2010/0079508 A1 discloses implementing a power management scheme using the results of gaze detection operations. In one embodiment, the device comprises a touch screen and may operate in an active mode, a partial standby mode, and a standby mode. When the device is in the active mode, the touch screen display may be configured to sense a location of user input within the area of the display. The device may also be configured to sense user inputs such as multi-touch user inputs and gestures such as swipe gestures and swipe and hold gestures while in the active mode. In contrast, when the device is in the standby mode, the touch screen display may be configured such that the display can sense general user input such as the presence or absence of contact without being able to resolve the location of the input. When the device detects that the user has looked away from the display (e.g., using a gaze detection sensor such as a camera), the device may dim the display and enter the partial standby mode. In the partial standby mode, the device may dim the display to a partial standby brightness level to conserve power and may retain the touch screen capabilities of the display. Alternatively, touch screen capabilities can be reduced in the partial standby mode. The device may switch from the partial standby mode to the active mode whenever appropriate. For example, when the device detects that a user's gaze is directed towards the display, the device may enter the active mode. When the device is operating in the partial standby mode and no user activity is detected for a given period of time, the device may enter the standby mode. The device may enter the standby mode after the device detects that the user has looked away and after a given period of user inactivity has elapsed following the device's detection that the user has looked away.

### Summary of Invention

### Technical Problem

The foregoing conventional technologies required the user to wait for the lapse of the fixed period of time or to do the operation with intention, for controlling the information terminal into the unacceptable state of input so as to prevent an erroneous operation thereon, and, for this reason, they were still unsatisfactory in terms of convenience.

Therefore, the present invention has been accomplished in view of the above problem and it is an object of the present invention to provide an information terminal having a display with a function as a touch panel and being capable of preventing the erroneous operation by easy and suitable control, a method for controlling input acceptance therein, and a program for controlling input acceptance therein.

### Solution to Problem

In order to solve the above problem, an information terminal according to one aspect of the present invention is an information terminal according to claim 1.

In order to solve the above problem, an input acceptance control method according to one aspect of the present invention is a method according to claim 2.

In order to solve the above problem, an input acceptance control program according to one aspect of the present invention is a program according to claim 3.

According to an example, it is determined whether the user's gaze is directed toward the display, and the control is performed in such a manner that when the gaze is directed toward the display, the input operation on the touch panel is made acceptable and that when the gaze is not directed toward the display, the input operation on the touch panel is made unacceptable. By this, acceptance/unacceptance of input is suitably controlled, without the need for the user's special manipulation or the lapse of the fixed period of time.

In the information terminal according to one aspect of the present invention, the control means may perform such control that when it is determined by the determination means that the user is not in the display gazing state and when a time since release from the display gazing state exceeds a first predetermined time, the input operation on the touch panel is made unacceptable.

According to the above aspect, since the control is performed so as to disable the input operation on the touch panel after a lapse of the predetermined time since a start of a state in which the gaze becomes off the display, it can be more accurately confirmed that the user has no intention of doing the input operation. Furthermore, even after the start of the state in which the gaze becomes off the display, the control is performed so as to keep the input operation acceptable, within the predetermined time. By this, even if the gaze becomes temporarily off the display during the user's manipulation of the information terminal, the control will not be performed so as to immediately disable the input. Therefore, the user is not forced to always gaze the display during the manipulation of the information terminal and, for this reason, more suitable control of acceptance/unacceptance of input is realized.

In the information terminal according to one aspect of the present invention, the control means may perform such control that when it is determined by the determination means that the user is not in the display gazing state, when the time since the release from the display gazing state is within the first predetermined time, and when no input operation on the touch panel is detected in a second predetermined time since the release from the display gazing state, the input operation on the touch panel is made unacceptable.

According to the above aspect, since the control is performed so as to disable the input operation on the touch panel after a lapse of the predetermined time since the start of the state in which the gaze becomes off the display and after a lapse of the predetermined time since suspension of the input operation on the touch panel, it is more certainly confirmed that the user has no intention of doing the input operation. Therefore, more suitable control of acceptance/unacceptance of input is realized.

In the information terminal according to one aspect of the present invention, the control means may perform such control that when it is determined by the determination means that the user is not in the display gazing state, when the time since the release from the display gazing state is within the first predetermined time, and when the input operation on the touch panel is detected in the second predetermined time since the release from the display gazing state, only a predetermined input operation, out of a plurality of types of input operations on the touch panel, is made acceptable.

According to an example, when the input on the touch panel is carried out before the fixed time since the user's gaze became off the touch panel, the control is performed so as to continuously accept the predetermined input operation. Therefore, when the user intends to continuously carry out the predetermined operation on the touch panel, the user is prevented from being forced to always gaze the display.

### Advantageous Effect of Invention

According to one aspect of the present invention, it becomes feasible to prevent the erroneous operation by easy and suitable control in the information terminal having the display with the function as a touch panel.

### Brief Description of Drawings

Fig. 1 is a drawing schematically showing a configuration of an information terminal.
Fig. 2 is a block diagram showing a functional configuration of the information terminal.
Fig. 3 is a hard block diagram of the information terminal.
Fig. 4 is a drawing showing an example of a configuration of a setting information storage unit and data stored therein.
Fig. 5 is a flowchart showing processing contents of a method for controlling input acceptance according to the present invention.
Fig. 6 is a drawing showing a configuration of a program for controlling input acceptance.

### Description of Embodiments

Embodiments of the information terminal, the method for controlling input acceptance, and the program for controlling input acceptance according to the present invention will be described with reference to the drawings. The same portions will be denoted by the same reference signs as much as possible, without redundant description.

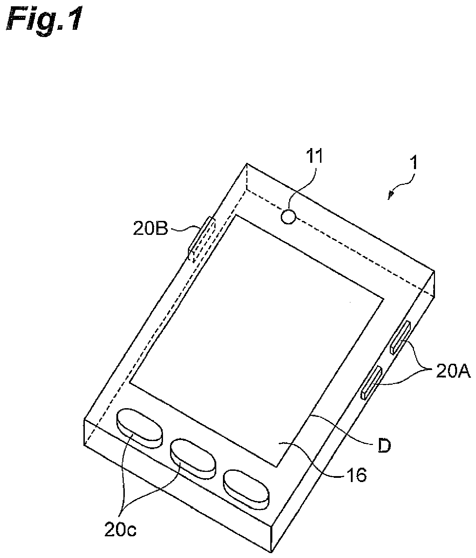

Fig. 1 is a drawing schematically showing a configuration in appearance of an information terminal 1. The information terminal 1 has a display D with a function as a touch panel 16. The information terminal 1 accepts an input operation on the touch panel 16 and executes a process according to a content of the accepted operation. Furthermore, the information terminal 1 is provided with a camera 11. The camera 1 1 is mounted on a surface where the display D is provided in a housing of the information terminal 1 and can take a face image of a user.

In addition, the information terminal 1 is provided with hardware keys 20_{A}-20_{D}. The information terminal 1 accepts an input operation through the hardware keys 20_{A}-20_{D} and executes a process according to the accepted operation.

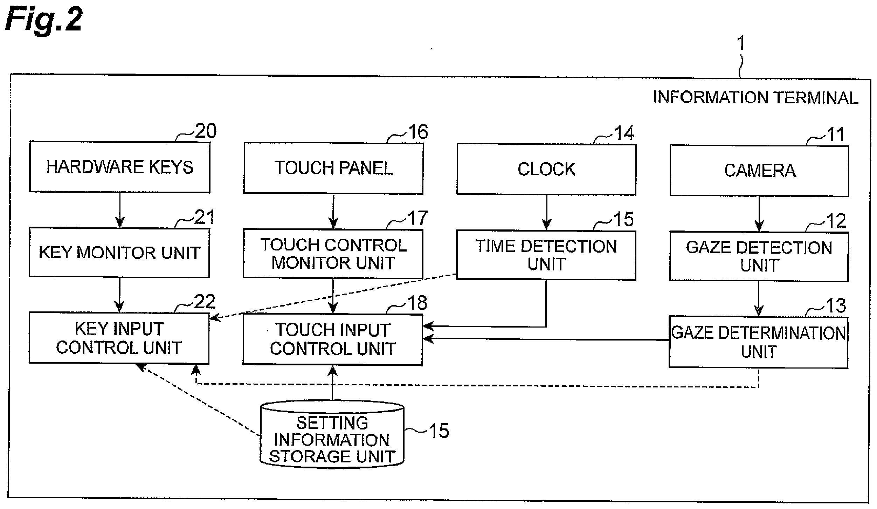

Fig. 2 is a block diagram showing a functional configuration of the information terminal 1. As shown in Fig. 2, the information terminal 1 is functionally provided with the camera 11, a gaze detection unit 12 (detection means), a gaze determination unit 13 (determination means), a clock 14, a time detection unit 15, the touch panel 16, a touch operation monitor unit 17, a touch input control unit 18 (control means), a setting information storage unit 19, the hardware keys 20, a key monitor unit 21, and a key input control unit 22.

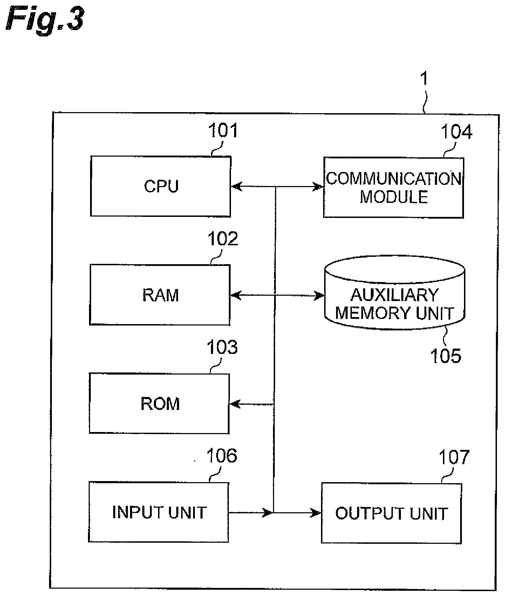

Fig. 3 is a hardware configuration diagram of the information terminal 1. As shown in Fig. 2, the information terminal 1 is physically configured as a computer system including a CPU 101, a RAM 102 and a ROM 103 as main memory devices, a communication module 104 as data transmission/reception device, an auxiliary storage unit 105 illustratively typified by a hard disk and a flash memory, an input unit 106 such as a keyboard being an input device, an output unit 107 such as a display, and so on. Each of the functions shown in Fig. 2 is implemented in such a manner that predetermined computer software is read onto the hardware such as the CPU 101 and RAM 102 shown in Fig. 3 and, under control of the CPU 101, the communication module 104, input unit 106, and output unit 107 are made to operate and readout and writing of data is carried out from and into the RAM 102 and the auxiliary storage unit 105. Referring again to Fig. 2, each of the functional units of the information terminal 1 will be described in detail.

The camera 11 is an optical imaging device as a combination of an imaging device with an engineering system and is mounted on the surface where the display D is provided in the housing of the information terminal 1. The camera 11 can take a face image of the user who manipulates the information terminal 1. The camera 11 sends the taken user's face image to the gaze detection unit 12.

The gaze detection unit 12 is a part that detects the user's gaze, based on the user's face image taken by the camera 11. Specifically, the gaze detection unit 12 extracts an eye portion from the user's face image, further extracts pupil portions from the extracted eye portion, and detects the user's gaze and its direction, based on a relative positional relationship between the eye portion and the pupil portions. It is noted that the other known techniques may be adopted for the detection of the gaze based on the face image.

The gaze determination unit 13 is a part that determines whether the user is in a display gazing state in which the gaze detected by the gaze detection unit 12 is directed toward the display D. The gaze determination unit 13 sends the result of the determination to the touch input control unit 18. Furthermore, the gaze determination unit 13 may be configured so as to further send the determination result to the key input control unit 22.

The clock 14 is a functional part that measures the present time and can send information about time to the time detection unit 15.

The time detection unit 15 sends the information about the present time acquired from the clock 14, to the touch input control unit 18. Furthermore, the time detection unit 15 may be configured so as to further send the information about the present time to the key input control unit 22.

The touch panel 16 constitutes the display D to display information and is a position input device capable of accepting an input operation indicative of a position on the touch panel. The touch panel 16 sends the information about the position of the accepted input operation to the touch operation monitor unit 17.

The touch operation monitor unit 17 is a part that acquires information of a touch state and the position where the input operation is carried out, on the touch panel 16, based on the information from the touch panel 16. The touch operation monitor unit 17 outputs the acquired information of those to the touch input control unit 18.

The touch input control unit 18 is a part that performs such control that when it is determined by the gaze determination unit 13 that the user is in the display gazing state, the input operation on the touch panel 16 is made acceptable and that when it is determined by the gaze determination unit 13 that the user is not in the display gazing state, the input operation on the touch panel is made unacceptable.

Furthermore, the touch input control unit 18 may be configured so as to perform such control that when it is determined by the gaze determination unit 13 that the user is not in the display gazing state and when a time since release from the display gazing state exceeds a first predetermined time, the input operation on the touch panel is made unacceptable. Since the first predetermined time is stored as setting information in the setting information storage unit 19, the touch input control unit 18 carries out the control process with reference to the setting information storage unit 19.

Furthermore, the touch input control unit 18 may be configured so as to perform such control that when it is determined by the gaze determination unit 13 that the user is not in the display gazing state, when the time since the release from the display gazing state is within the first predetermined time, and when no input operation on the touch panel is detected in a second predetermined time since the release from the display gazing state, the input operation on the touch panel is made unacceptable. The second predetermined time is stored as setting information in the setting information storage unit 19.

Furthermore, the touch input control unit 18 may be configured so as to perform such control that when it is determined by the gaze determination unit 13 that the user is not in the display gazing state, when the time since the release from the display gazing state is within the first predetermined time, and when the input operation on the touch panel is detected in the second predetermined time since the release from the display gazing state, only a predetermined input operation, out of a plurality of types of input operations on the touch panel, is made acceptable.

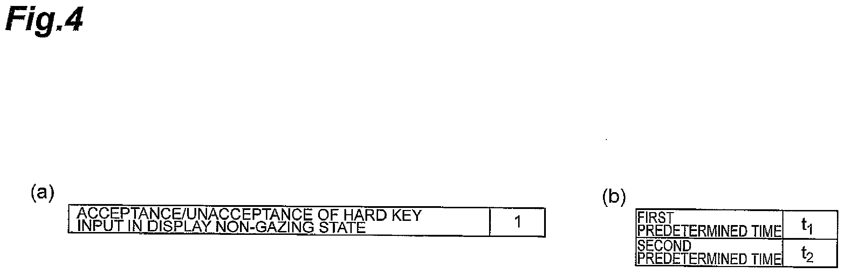

The setting information storage unit 19 is a part that stores the setting information to which reference is made in the control process in the touch input control unit 18. Fig. 4 is a drawing showing an example of the setting information stored in the setting information storage unit 19. Fig. 4 (a) shows an example of the setting information indicative of setting of whether or not the hard key input is accepted in a display non-gazing state which is not the display gazing state. Furthermore, Fig. 4 (b) is an example of the setting information about the first predetermined time and the second predetermined time to which reference is made by the touch input control unit 18.

The hardware keys 20 are an input device that mechanically operates with a user's push operation and that detects the user's input operation and sends information about its operation state to the key monitor unit 21.

The key monitor unit 21 is a part that acquires information about an input operation state on the hardware keys 20, based on the information from the hardware keys 20. The key monitor unit 21 outputs the acquired information of those to the key input control unit 22.

The key input control unit 22 is a part that controls acceptance/unacceptance of the input operation on the hardware keys 20. Specifically, for example, the key input control unit 22 may be configured so as to perform the same control as the control of acceptance/unacceptance of the input operation on the touch panel by the touch input control unit 18, based on the information from the gaze determination unit 13, time detection unit 15, setting information storage unit 19, and key monitor unit 21.

Furthermore, the key input control unit 22 can perform control to disable acceptance of the input operation on the hardware keys 20 when the touch input control unit 18 performs the control to disable acceptance of the input operation on the touch panel. Specifically, when the setting information about acceptance/unacceptance of hard key input in the display non-gazing state shown in Fig. 4 (a) is set to "0" and when the control is performed so as to disable acceptance of the input operation on the touch panel, the key input control unit 22 performs the control to disable acceptance of the input operation on the hardware keys 20.

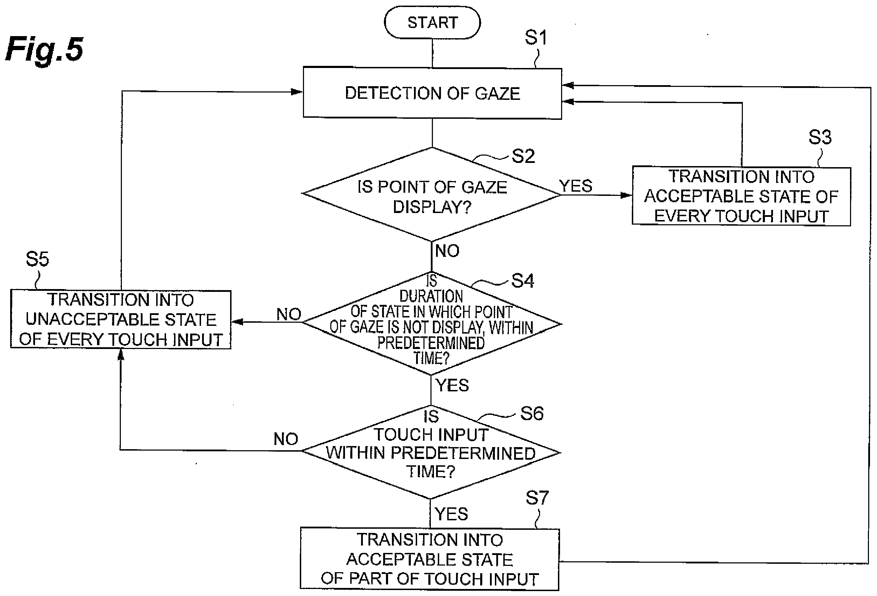

Next, a method for controlling input acceptance in the information terminal 1 according to the present invention will be described with reference to Fig. 5. Fig. 5 is a flowchart showing processing contents of the method for controlling input acceptance.

First, the gaze detection unit 12 detects the user's gaze, based on the user's face image taken by the camera 11 (S1). Subsequently, the gaze determination unit 13 determines whether the user is in the display gazing state in which the gaze detected by the gaze detection unit 12 is directed toward the display D (S2). When it is determined that the user is in the display gazing state, the processing procedure is moved to step S3. On the other hand, when it is not determined that the user is in the display gazing state, the processing procedure is moved to step S4.

In step S3, the touch input control unit 18 performs the control to enable acceptance of the input operation on the touch panel 16 (S3). On the other hand, in step S4, the touch input control unit 18 determines whether the time since release from the display gazing state is within the first predetermined time, with reference to the time information from the time detection unit 15 (S4). When the time since the release from the display gazing state is determined to be within the first predetermined time, the processing procedure is moved to step S6. On the other hand, when it is not determined that the time since the release from the display gazing state is within the first predetermined time, the processing procedure is moved to step S5. It is noted that when the first predetermined time is set to zero, the processing procedure is always moved from step S4 to step S5.

In step S5, the touch input control unit 18 performs the control to disable acceptance of the input operation on the touch panel (S5). By performing such control to move the processing procedure from step S4 to step S5, the control is performed so as to disable acceptance of the input operation on the touch panel after the predetermined time has elapsed since the gaze became off the display; for this reason, it can be more accurately confirmed that the user has no intention of doing the input operation. Even if the user goes into a state in which the gaze is off the display, the control will be performed so as to keep the input operation acceptable, in the predetermined time. This will prevent the control from being performed so as to immediately disable the input, even if the gaze becomes temporarily off the display during the user's manipulation of the information terminal. Therefore, the user is not forced to always gaze the display during the manipulation of the information terminal, and thus more suitable control of acceptance/unacceptance of input is realized.

In step S5, according to the setting information shown in Fig. 4 (a), the key input control unit 22 may perform the control to disable acceptance of the input operation on the hardware keys 20, in conjunction with the control by the touch input control unit 18 to disable acceptance of the input operation on the touch panel.

In step S6, the touch input control unit 18 determines whether the input operation on the touch panel is detected in the second predetermined time since the release from the display gazing state, based on the information from the touch operation monitor unit 17 (S6). When it is determined that the input operation on the touch panel is detected in the second predetermined time, the processing procedure is moved to step S7. On the other hand, when it is not determined that the input operation on the touch panel is detected in the second predetermined time, the processing procedure is moved to step S5.

By performing such control to move the processing procedure from step S4 through step S6 to step S5, the control is performed so as to disable the input operation on the touch panel, after the lapse of the predetermined time since the gaze became off the display and after the lapse of the predetermined time since suspension of the input operation on the touch panel; for this reason, it is more certainly confirmed that the user has no intention of doing the input operation. Therefore, more suitable control of acceptance/unacceptance of input is realized.

In step S7, the touch input control unit 18 performs the control to enable acceptance of only the predetermined input operation, out of a plurality of types of input operations on the touch panel (S7). When the control as shown in step S7 is carried out, the control is performed so as to continuously enable the predetermined input operation if the user has started the input on the touch panel before the fixed time since the user moved the gaze off the touch panel. Therefore, when the predetermined operation on the touch panel is continuously carried out, the user is prevented from being forced to always gaze the display. Examples of the predetermined input operation allowed to accept in the control in step S7 include the flick operation and slide operation for scrolling the screen. Since during execution of such operations the user does not always gaze the screen, it is preferable to perform the control to enable the input operation on the touch panel even if the user is not in the display gazing state.

After the control process of step S3, step S5, and step S7, the processing procedure returns to step S1 to repeat the subsequent processing. It is noted that the key input control unit 22 may be configured to perform the same control of acceptance/unacceptance of input on the hardware keys 20 as that by the touch input control unit 18 as shown in step S3, step S5, and step S7.

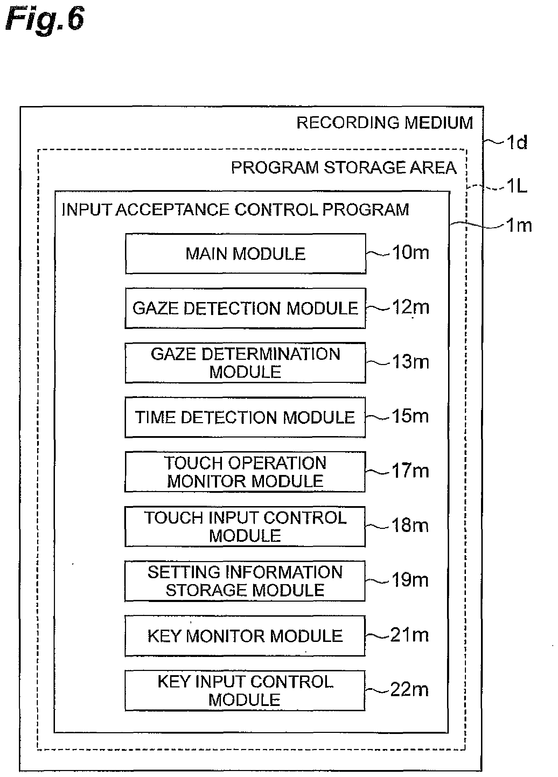

Next, an input acceptance control program for letting a computer function as the information terminal 1 of the present embodiment will be described. Fig. 6 is a drawing showing a configuration of the input acceptance control program 1m.

The input acceptance control program 1m is configured with a main module 10m for totally controlling the display control process, a gaze detection module 12m, a gaze determination module 13m, a time detection module 15m, a touch operation monitor module 17m, a touch input control module 18m, a setting information storage module 19m, a key monitor module 21m, and a key input control module 22m. Then, the respective functions for the respective functional units in the information terminal 1 are implemented by the respective modules. It is noted that the input acceptance control program 1m may be configured in a form in which it is transmitted via a transmission medium such as a communication line or in a form in which it is stored in a program storage area 1r of a recording medium 1d, as shown in Fig. 6.

In the information terminal 1, the input acceptance control method, and the input acceptance control program of the embodiments described above, the gaze determination unit 13 determines whether the user's gaze detected by the gaze detection unit 12 is directed toward the display and the touch input control unit 18 performs such control that when the gaze is directed toward the display, the input operation on the touch panel is made acceptable and that when the gaze is not directed toward the display, the input operation on the touch panel is made unacceptable. By this, the acceptance/unacceptance of input is suitably controlled, without the need for the user's special manipulation or the lapse of the fixed period of time.

The above detailed the present invention on the basis of the embodiments thereof. However, the present invention is by no means intended to be limited to the above embodiments. The present invention can be modified in many ways without departing from the scope of the invention.

### Reference Signs List

1 information terminal; 11 camera; 12 gaze detection unit; 13 gaze determination unit; 14 clock; 15 time detection unit; 16 touch panel; 17 touch operation monitor unit; 18 touch input control unit; 19 setting information storage unit; 20 hardware keys; 21 key monitor unit; 22 key input control unit; 1d recording medium; 1m input acceptance control program; 1r program storage area; 10m main module; 12m gaze detection module; 13m gaze determination module; 15m time detection module; 17m touch operation monitor module; 18m touch input control module; 19m setting information storage module; 21m key monitor module; 22m key input control module; D display.

## Claims

1. An information terminal (1) having a display (D) with a function as a touch panel (16) and an imaging device (11), comprising:
detection means (12) for detecting user's gaze, based on a face image of a user taken by the imaging device (11);
determination means (13) for determining whether the user is in a display gazing state in which the gaze detected by the detection means (12) is directed toward the display (D); and
control means (18) for performing such control that
when it is determined by the determination means (13) that the user is in the display gazing state, an input operation on the touch panel (16) is made acceptable, wherein the control means (18) performs such control that, when it is determined by the determination means (13) that the user is not in the display gazing state and when the time since the release from the display gazing state exceeds a first predetermined time, the input operation on the touch panel (16) is made unacceptable;
**characterized in**
**that** when it is determined by the determination means (13) that the user is not in the display gazing state,
when a time since the release from the display gazing state is within a first predetermined time, and
when the input operation on the touch panel (16) is detected in a second predetermined time since the release from the display gazing state,
only a predetermined input operation, which is a slide operation, out of a plurality of types of input operations on the touch panel (16), is made acceptable,
when it is determined by the determination means (13) that the user is not in the display gazing state,
when the time since the release from the display gazing state is within the first predetermined time, and
when no input operation on the touch panel (16) is detected in the second predetermined time since the release from the display gazing state,
the input operation on the touch panel (16) is made unacceptable.

2. A method for controlling input acceptance in an information terminal (1) having a display (D) with a function as a touch panel (16), the method comprising:
a detection step of detecting user's gaze (S1);
a determination step of determining whether a user is in a display gazing state in which the gaze detected in the detection step is directed toward the display (S2); and
a control step of performing such control
that when it is determined in the determination step that the user is in the display gazing state, an input operation on the touch panel (16) is made acceptable (S3) and that when it is determined in the determination step (S2) that the user is not in the display gazing state and when the time since the release from the display gazing state exceeds the first predetermined time, the input operation on the touch panel (16) is made unacceptable (S5),
**characterized in**
**that** when it is determined in the determination step that the user is not in the display gazing state,
when a time since the release from the display gazing state is within the first predetermined time (S4), and
when the input operation on the touch panel is detected in the second predetermined time since the release from the display gazing state (S6),
only a predetermined input operation, which is a slide operation, out of a plurality of types of input operations on the touch panel, is made acceptable (S7), and
**that**, when it is determined in the determination step (S2) that the user is not in the display gazing state,
when the time since the release from the display gazing state is within the first predetermined time, and
when no input operation on the touch panel (16) is detected in the second predetermined time since the release from the display gazing state,
the input operation on the touch panel (16) is made unacceptable (S5).

3. A program for controlling input acceptance, the program letting an information terminal (1) having a display (D) with a function as a touch panel (16), implement:
a detection function to detect user's gaze;
a determination function to determine whether a user is in a display gazing state in which the gaze detected by the detection function is directed toward the display (D); and
a control function to perform such control
that when it is determined by the determination function that the user is in the display gazing state, an input operation on the touch panel (16) is made acceptable and that when it is determined by the determination function that the user is not in the display gazing state and when the time since the release from the display gazing state exceeds the first predetermined time, the input operation on the touch panel (16) is made unacceptable,
**characterized in**
**that** when it is determined by the determination function that the user is not in the display gazing state,
when a time since the release from the display gazing state is within the first predetermined time, and
when the input operation on the touch panel is detected in the second predetermined time since the release from the display gazing state,
only a predetermined input operation, which is a slide operation, out of a plurality of types of input operations on the touch panel (16), is made acceptable, and
**that**, when it is determined by the determination function that the user is not in the display gazing state,
when the time since the release from the display gazing state is within the first predetermined time, and
when no input operation on the touch panel (16) is detected in the second predetermined time since the release from the display gazing state,
the input operation on the touch panel (16) is made unacceptable.

## Patentansprüche

1. Informationsterminal (1) mit einer Anzeige (D) mit einer Funktion als ein Berührungsbildschirm (16) und einer Bildgebungsvorrichtung (11), umfassend:
Erkennungsmittel (12) zum Erkennen des Blicks des Benutzers auf der Grundlage eines Gesichtsbildes eines Benutzers, das von der Bildgebungsvorrichtung (11) aufgenommen wurde;
Ermittlungsmittel (13) zum Bestimmen, ob sich der Benutzer in einem Anzeige-Blickzustand befindet, in dem der von dem Erkennungsmittel (12) erfasste Blick auf die Anzeige (D) gerichtet ist; und
Kontrollmittel (18) zur Durchführung einer solchen Kontrolle, dass
wenn mit Hilfe das Ermittlungsmittel (13) festgestellt wird, dass sich der Benutzer im Zustand der Anzeigebetrachtung befindet, ein Eingabevorgang auf dem Berührungsbildschirm (16) akzeptabel gemacht wird,
wobei die Steuereinrichtung (18) eine solche Steuerung durchführt, dass, wenn durch das Ermittlungsmittel (13) bestimmt wird, dass sich der Benutzer nicht im Zustand der Anzeigebetrachtung befindet, und wenn die Zeit seit der Freigabe aus dem Zustand der Anzeigebetrachtung eine erste vorbestimmte Zeit überschreitet, der Eingabevorgang auf dem Berührungsbildschirm (16) inakzeptabel gemacht wird;
**gekennzeichnet durch**
dass, wenn **durch** das Ermittlungsmittel (13) festgestellt wird, dass sich der Benutzer nicht im Zustand der Anzeigebetrachtung befindet,
wenn eine Zeit seit der Freigabe aus dem Zustand der Anzeigebetrachtung innerhalb einer ersten vorgegebenen Zeit liegt, und
wenn der Eingabevorgang auf dem Berührungsbildschirm (16) in einer zweiten vorbestimmten Zeit seit dem Verlassen des Zustands der Anzeigebetrachtung erkannt wird,
nur ein vorbestimmter Eingabevorgang, der ein Schiebevorgang ist, aus einer Vielzahl von Arten von Eingabevorgängen auf dem Berührungsbildschirm (16) akzeptabel gemacht wird, und
wenn **durch** das Ermittlungsmittel (13) festgestellt wird, dass sich der Benutzer nicht im Zustand der Anzeigebetrachtung befindet,
wenn die Zeit seit dem Verlassen des Zustands der Anzeigebetrachtung innerhalb der ersten vorgegebenen Zeit liegt, und
wenn in der zweiten vorgegebenen Zeit seit dem Verlassen des Anzeigestatus keine Eingabeoperation auf dem Berührungsbildschirm (16) erkannt wird,
der Eingabevorgang auf dem Berührungsbildschirm (16) inakzeptabel gemacht wird.

2. Verfahren zum Steuern der Eingabeannahme in einem Informationsterminal (1), das eine Anzeige (D) mit einer Funktion als Berührungsbildschirm (16) aufweist, wobei das Verfahren umfasst:
ein Detektionsschritt der Erfassung des Blicks des Benutzers (S1);
einen Bestimmungsschritt zum Bestimmen, ob sich ein Benutzer in einem Zustand der Anzeigebetrachtung befindet, in dem der im Erfassungsschritt erfasste Blick auf den Bildschirm gerichtet ist (S2); und
einen Kontrollschritt zur Durchführung einer solchen Kontrolle
dass, wenn im Bestimmungsschritt festgestellt wird, dass sich der Benutzer im Zustand der Anzeigebetrachtung befindet, ein Eingabevorgang auf dem Berührungsbildschirm (16) akzeptabel gemacht wird (S3) und
dass, wenn im Bestimmungsschritt (S2) festgestellt wird, dass sich der Benutzer nicht im Zustand der Anzeigebetrachtung befindet, und wenn die Zeit seit dem Verlassen des Zustands der Anzeigebetrachtung die erste vorbestimmte Zeit überschreitet, der Eingabevorgang auf dem Berührungsbildschirm (16) inakzeptabel gemacht wird (S5),
**gekennzeichnet durch**
dass, wenn im Ermittlungsschritt festgestellt wird, dass sich der Benutzer nicht im Zustand der Anzeigebetrachtung befindet,
wenn eine Zeit seit der Freigabe aus dem Zustand der Anzeigebetrachtung innerhalb der ersten vorgegebenen Zeit (S4) liegt, und
wenn der Eingabevorgang auf dem Berührungsbildschirm in der zweiten vorgegebenen Zeit seit dem Verlassen des Anzeigestatus (S6) erkannt wird,
nur ein vorbestimmter Eingabevorgang, der ein Schiebevorgang ist, aus einer Vielzahl von Arten von Eingabevorgängen auf dem Berührungsbildschirm akzeptabel gemacht wird (S7), und
dass, wenn im Ermittlungsschritt (S2) festgestellt wird, dass sich der Benutzer nicht im Zustand der Anzeigebetrachtung befindet,
wenn die Zeit seit dem Verlassen des Zustand der Anzeigebetrachtung innerhalb der ersten vorgegebenen Zeit liegt, und
wenn in der zweiten vorgegebenen Zeit seit dem Verlassen des Anzeigestatus keine Eingabeoperation auf dem Berührungsbildschirm (16) erkannt wird,
der Eingabevorgang auf dem Berührungsbildschirm (16) inakzeptabel gemacht wird (S5).

3. Programm zur Steuerung der Eingabeannahme, wobei das Programm ein Informationsterminal (1), das eine Anzeige (D) mit einer Funktion als Berührungsbildschirm (16) hat, ausführen lässt:
eine Erkennungsfunktion, um den Blick des Benutzers zu erkennen;
eine Ermittlungsfunktion zum Bestimmen, ob sich ein Benutzer in einem Zustand der Anzeigebetrachtung befindet, in dem der von der Erkennungsfunktion erkannte Blick auf die Anzeige gerichtet ist (D); und
eine Kontrollfunktion zur Durchführung einer solchen Kontrolle
dass, wenn durch die Bestimmungsfunktion festgestellt wird, dass sich der Benutzer im Zustand der Anzeigebetrachtung befindet, ein Eingabevorgang auf dem Berührungsbildschirm (16) akzeptabel gemacht wird und
dass, wenn durch die Ermittlungsfunktion festgestellt wird, dass sich der Benutzer nicht im Anzeigeschau-Zustand befindet,
und wenn die Zeit seit dem Verlassen des Zustands der Anzeigebetrachtung die erste vorgegebene Zeit überschreitet, wird der Eingabevorgang auf dem Berührungsbildschirm (16) inakzeptabel gemacht,
**gekennzeichnet durch**
dass, wenn **durch** die Ermittlungsfunktion festgestellt wird, dass sich der Benutzer nicht im Zustand der Anzeigebetrachtung befindet,
wenn eine Zeit seit der Freigabe aus dem Zustand der Anzeigebetrachtung innerhalb der ersten vorgegebenen Zeit liegt, und
wenn der Eingabevorgang auf dem Berührungsbildschirm in der zweiten vorgegebenen Zeit seit dem Verlassen des Anzeigestatus erkannt wird,
nur ein vorbestimmter Eingabevorgang, der ein Schiebevorgang ist, aus einer Vielzahl von Arten von Eingabevorgängen auf dem Berührungsbildschirm (16) akzeptabel gemacht wird,
und dass, wenn **durch** die Ermittlungsfunktion festgestellt wird, dass sich der Benutzer nicht im Zustand der Anzeigebetrachtung befindet,
wenn die Zeit seit dem Verlassen des Zustands der Anzeigebetrachtung innerhalb der ersten vorgegebenen Zeit liegt, und
wenn in der zweiten vorgegebenen Zeit seit dem Verlassen des Anzeigestatus keine Eingabeoperation auf dem Berührungsbildschirm (16) erkannt wird,
der Eingabevorgang auf dem Berührungsbildschirm (16) inakzeptabel gemacht wird.

## Revendications

1. Terminal d'informations (1) ayant un afficheur (D) avec une fonction de panneau tactile (16) et de dispositif d'imagerie (11), comprenant :
des moyens de détection (12) pour détecter le regard d'un utilisateur, sur la base d'une image faciale d'un utilisateur prise par le dispositif d'imagerie (11) ;
des moyens de détermination (13) pour déterminer si l'utilisateur est dans un état de regard sur l'afficheur dans lequel le regard détecté par les moyens de détection (12) est dirigé vers l'afficheur (D) ; et
des moyens de commande (18) pour réaliser une commande telle que
lorsqu'il est déterminé par les moyens de détermination (13) que l'utilisateur est dans l'état de regard sur l'afficheur, une opération d'entrée sur le panneau tactile (16) est rendue acceptable,
dans lequel les moyens de commande (18) effectuent une commande telle que, lorsqu'il est déterminé par les moyens de détermination (13) que l'utilisateur n'est pas dans l'état de regard sur l'afficheur et lorsque la durée depuis le relâchement de l'état de regard sur l'afficheur dépasse une première durée prédéterminée, l'opération d'entrée sur le panneau tactile (16) est rendue inacceptable ;
**caractérisé en ce que**
lorsqu'il est déterminé par les moyens de détermination (13) que l'utilisateur n'est pas dans l'état de regard sur l'afficheur,
lorsqu'une durée depuis le relâchement de l'état de regard sur l'afficheur est dans une première durée prédéterminée, et
lorsque l'opération d'entrée sur le panneau tactile (16) est détectée dans une deuxième durée prédéterminée depuis le relâchement de l'état de regard sur l'afficheur,
seule une opération d'entrée prédéterminée, qui est une opération de glissement, parmi une pluralité de types d'opérations d'entrée sur le panneau tactile (16), est rendue acceptable,
lorsqu'il est déterminé par les moyens de détermination (13) que l'utilisateur n'est pas dans l'état de regard sur l'afficheur,
lorsque la durée depuis le relâchement de l'état de regard sur l'afficheur est dans la première durée prédéterminée, et
lorsque aucune opération d'entrée sur le panneau tactile (16) n'est détectée dans la deuxième durée prédéterminée depuis le relâchement de l'état de regard sur l'afficheur,
l'opération d'entrée sur le panneau tactile (16) est rendue inacceptable.

2. Procédé pour commander une acceptation d'entrée dans un terminal d'informations (1) ayant un afficheur (D) avec une fonction de panneau tactile (16), le procédé comprenant :
une étape de détection consistant à détecter le regard d'un utilisateur (S1) ;
une étape de détermination consistant à déterminer si un utilisateur est dans un état de regard sur l'afficheur dans lequel le regard détecté à l'étape de détection est dirigé vers l'afficheur (S2) ; et
une étape de commande consistant à réaliser une commande telle que
lorsqu'il est déterminé à l'étape de détermination que l'utilisateur est dans l'état de regard sur l'afficheur, une opération d'entrée sur le panneau tactile (16) est rendue acceptable (S3),
et lorsqu'il est déterminé à l'étape de détermination (S2) que l'utilisateur n'est pas dans l'état de regard sur l'afficheur et lorsque la durée depuis le relâchement de l'état de regard sur l'afficheur dépasse la première durée prédéterminée, l'opération d'entrée sur le panneau tactile (16) est rendue inacceptable (S5),
**caractérisé en ce que**
lorsqu'il est déterminé à l'étape de détermination que l'utilisateur n'est pas dans l'état de regard sur l'afficheur,
lorsqu'une durée depuis le relâchement de l'état de regard sur l'afficheur est dans la première durée prédéterminée (S4), et
lorsque l'opération d'entrée sur le panneau tactile est détectée dans la deuxième durée prédéterminée depuis le relâchement de l'état de regard sur l'afficheur (S6),
seule une opération d'entrée prédéterminée, qui est une opération de glissement, parmi une pluralité de types d'opérations d'entrée sur le panneau tactile, est rendue acceptable (S7),
lorsqu'il est déterminé à l'étape de détermination (S2) que l'utilisateur n'est pas dans l'état de regard sur l'afficheur,
lorsque la durée depuis le relâchement de l'état de regard sur l'afficheur est dans la première durée prédéterminée, et
lorsque aucune opération d'entrée sur le panneau tactile (16) n'est détectée dans la deuxième durée prédéterminée depuis le relâchement de l'état de regard sur l'afficheur,
l'opération d'entrée sur le panneau tactile (16) est rendue inacceptable (S5).

3. Programme pour commander une acceptation d'entrée, le programme laissant un terminal d'informations (1) ayant un afficheur (D) avec une fonction de panneau tactile (16), mettre en œuvre :
une fonction de détection pour détecter le regard d'un utilisateur ;
une fonction de détermination pour déterminer si un utilisateur est dans un état de regard sur l'afficheur dans lequel le regard détecté par la fonction de détection est dirigé vers l'afficheur (D) ; et
une fonction de commande pour réaliser une commande telle que
lorsqu'il est déterminé par la fonction de détermination que l'utilisateur est dans l'état de regard sur l'afficheur, une opération d'entrée sur le panneau tactile (16) est rendue acceptable et
lorsqu'il est déterminé par la fonction de détermination que l'utilisateur n'est pas dans l'état de regard sur l'afficheur et lorsque la durée depuis le relâchement de l'état de regard sur l'afficheur dépasse la première durée prédéterminée, l'opération d'entrée sur le panneau tactile (16) est rendue inacceptable,
**caractérisé en ce que**
lorsqu'il est déterminé par la fonction de détermination que l'utilisateur n'est pas dans l'état de regard sur l'afficheur,
lorsqu'une durée depuis le relâchement de l'état de regard sur l'afficheur est dans la première durée prédéterminée, et
lorsque l'opération d'entrée sur le panneau tactile est détectée dans la deuxième durée prédéterminée depuis le relâchement de l'état de regard sur l'afficheur,
seule une opération d'entrée prédéterminée, qui est une opération de glissement, parmi une pluralité de types d'opérations d'entrée sur le panneau tactile (16), est rendue acceptable,
lorsqu'il est déterminé par la fonction de détermination que l'utilisateur n'est pas dans l'état de regard sur l'afficheur,
lorsque la durée depuis le relâchement de l'état de regard sur l'afficheur est dans la première durée prédéterminée, et
lorsque aucune opération d'entrée sur le panneau tactile (16) n'est détectée dans la deuxième durée prédéterminée depuis le relâchement de l'état de regard sur l'afficheur,
l'opération d'entrée sur le panneau tactile (16) est rendue inacceptable.
